# EUROPEAN PATENT APPLICATION

(11) **EP 4 693 781 A1**
(43) Date of publication of application: **11.02.2026**
(21) Application number: 24780412.3
(22) Date of filing: 27.03.2024
(51) Int. Cl.: H02G 11/02, B60R 16/02, B65H 75/48

(54) **CABLE WINDING DEVICE AND SEAT POWER SUPPLY DEVICE**

(30) Priority: 30.03.2023 JP 2023055152; 30.03.2023 JP 2023055153
(71) Applicant: FURUKAWA ELECTRIC CO., LTD., Tokyo 100-8322 (JP); FURUKAWA AUTOMOTIVE SYSTEMS INC., Shiga 522-0242 (JP)
(72) Inventor: SAOYA Naoshi, Inukami-gun, Shiga 522-0242 (JP); UTSUNOMIYA Hirofumi, Inukami-gun, Shiga 522-0242 (JP); YOSHIDA Yuki, Inukami-gun, Shiga 522-0242 (JP); MIYAHARA Koshi, Inukami-gun, Shiga 522-0242 (JP)
(74) Representative: Weickmann & Weickmann PartmbB
(86) International application number: PCT/JP2024/012171
(87) International publication number: WO 2024/204306

(57) **Abstract**

Provided is a cable winding device capable of drawing out or winding up a flat cable in accordance with a sliding operation of an attachment target and capable of preventing the flat cable from being twisted due to a rotation operation of the attachment target. A housing 3 accommodating a flexible flat cable 2 is divided by a partition 4 into a central space Si and an outer circumferential space So, and a holding portion 5 holds a border portion 23 between a portion accommodated in the central space Si and a portion accommodated in the outer circumferential space So. The flexible flat cable 2 includes a central wound portion 21 wound like a swirl about a rotation shaft 6 in the central space Si, and an outer circumferential wound portion 22 wound like a swirl about the partition 4 in the outer circumferential space So. One end extended from an inner circumferential portion of the central wound portion 21 is connected with an electric member E1 of a seat 200, and the other end extended from an outer circumferential portion of the outer circumferential wound portion 22 is connected with an electric member E2 of a vehicle 100.

## Description

### TECHNICAL FIELD

The present invention relates to a cable winding device responsive to both of a sliding operation and a rotation operation of an attachment target, and a seat electric power supply device using such a cable winding device.

### BACKGROUND ART

Conventionally, a cable winding device is known (see Patent Literature 1). The cable winding device includes a band-like flat cable and a housing accommodating the flat cable, and is configured such that the flat cable is drawn out or wound up in accordance with a sliding operation of an attachment target to which the cable winding device is attached. Such a cable winding device is used as a seat electric power supply device supplying electric power to a seat of a vehicle.

Recently, a seat capable of making a rotation operation in addition to the sliding operation has been proposed. In the case where the conventional cable winding device is used for such a seat, the flat cable is twisted by the rotation operation and may undesirably be entangled. In addition, the twisted flat cable may undesirably not be drawn out or wound up smoothly.

### CITATION LIST

### PATENT LITERATURE

Patent Literature 1: Japanese Laid-Open Patent Publication No. 2019-218150

### SUMMARY OF INVENTION

### TECHNICAL PROBLEM

The present invention has an object of providing a cable winding device capable of drawing out or winding up a flat cable in accordance with a sliding operation of an attachment target and capable of preventing the flat cable from being twisted due to a rotation operation of the attachment target, and also providing a seat electric power supply device using such a cable winding device.

### SOLUTION TO PROBLEM

The present invention is directed to a cable winding device including a band-like flat cable; a housing accommodating the flat cable; a partition dividing an inner space of the housing into a central space and an outer circumferential space; and a holding portion holding a border portion of the flat cable between a portion thereof accommodated in the central space and a portion thereof accommodated in the outer circumferential space. A rotation shaft rotatable about a direction along a width direction of the flat cable while holding the flat cable is provided in a central portion of the central space. A guide opening guiding the flat cable, to be drawn out from the inside toward the outside of the outer circumferential space or to be wound up from the outside toward the inside of the outer circumferential space, is provided at an outer edge of the outer circumferential space. The flat cable includes a central wound portion wound like a swirl about the rotation shaft in the central space, and an outer circumferential wound portion wound like a swirl about the partition in the outer circumferential space. One end of the flat cable extended from an inner circumferential portion of the central wound portion is connected with an electric member of an attachment target capable of making a sliding operation and a rotation operation, and the other end of the flat cable extended from an outer circumferential portion of the outer circumferential wound portion is connected with an electric member on an electric power supply source side.

The present invention allows the flat cable to be drawn out or wound up in accordance with the sliding operation of the attachment target, and also prevents the flat cable from being twisted due to the rotation operation of the attachment target.

This will be described in more detail. In the case where the attachment target of the cable winding device is moved toward one side of a sliding direction (sliding operation) to pull the flat cable, the outer circumferential wound portion in the outer circumferential space is wound while being tightened and is drawn out toward the outside of the outer circumferential space. By contrast, in the case where the attachment target of the cable winding device is moved toward the other side of the sliding direction (sliding operation) to push the flat cable into the inside of the outer circumferential space from the guide opening, the outer circumferential wound portion in the outer circumferential space is wound while being loosened and is wound up toward the inside of the outer circumferential space.

In the case where the attachment target of the cable winding device is rotated in one direction of a rotation direction (rotation operation), the rotation shaft rotates in the one direction in association with the rotation operation of the attachment target. Therefore, the central wound portion in the central space is wound while being loosened. The central wound portion is caused to follow the rotation operation of the attachment target in this manner, so that the flat cable is prevented from being twisted. By contrast, in the case where the attachment target of the cable winding device is rotated in the other direction of the rotation direction (rotation operation), the rotation shaft is rotated in the other direction in association with the rotation operation of the attachment target. Therefore, the central wound portion in the central space is wound while being tightened. The central wound portion is caused to follow the rotation operation of the attachment target in this manner, so that the flat cable is prevented from being twisted.

In an embodiment of the present invention, the central wound portion and the outer circumferential wound portion may be wound in the same direction as each other.

With the present invention, when the central wound portion of the flat cable is wound while being tightened or loosened, the border portion between the central wound portion and the outer circumferential wound portion is prevented from being subjected to a local load. In addition, also when the outer circumferential wound portion of the flat cable is wound while being tightened or loosened, the border portion between the central wound portion and the outer circumferential wound portion is prevented from being subjected to a local load.

In an embodiment of the present invention, the holding portion may be an insertion hole through which the flat cable is to be inserted, the insertion hole being formed in the partition.

With the present invention, the central wound portion and the outer circumferential wound portion of the flat cable are formed of one continuous flat cable. In addition, the cable winding device holds the border portion between the central wound portion and the outer circumferential wound portion with certainty with a simple configuration.

In an embodiment of the present invention, a restriction piece restricting a direction in which the flat cable guided out from the holding portion is to be guided out may be provided.

With the present invention, the direction in which the flat cable is to be guided out is restricted with certainty. Therefore, the flat cable is prevented from being subjected to a local load as a result of being bent by the sliding operation or the rotation operation of the attachment target.

In an embodiment of the present invention, the flat cable may be of one flexible flat cable or may include a plurality of flexible flat cables provided in a stacked manner.

With the present invention, the flat cable is bendable with a small bend radius. Therefore, the diameters of the central space and the outer circumferential space are made short, and this allows the cable winding device to be compact. The bent flat cable has such a high elasticity as to restore to an original shape thereof, and therefore, the wound portions are wound while being loosened and are spread only by a repulsive force thereof. This allows the configuration to be simplified.

The present invention is directed to a cable winding device including a band-like flat cable; a housing accommodating the flat cable in a state where the flat cable is wound like a swirl; a partition dividing an inner space of the housing into a central space and an outer circumferential space; and a holding portion holding a border portion of the flat cable between a portion thereof accommodated in the central space and a portion thereof accommodated in the outer circumferential space. A rotation shaft rotatable about a direction along a width direction of the flat cable while holding the flat cable is provided in a central portion of the central space. A guide opening guiding the flat cable, to be drawn out from the inside toward the outside of the outer circumferential space or to be wound up from the outside toward the inside of the outer circumferential space, is provided at an outer edge of the outer circumferential space. The flat cable includes a central wound portion wound around in the central space, and an outer circumferential wound portion wound around in the outer circumferential space. One end of the flat cable extended from an inner circumferential portion of the central wound portion is connected with an electric member of an attachment target capable of making a sliding operation and a rotation operation, and the other end of the flat cable extended from an outer circumferential portion of the outer circumferential wound portion is connected with an electric member on an electric power supply source side. At least one of the central wound portion and the outer circumferential wound portion includes an inner wound portion of the flat cable wound around on a diametrically inner side, an outer wound portion of the flat cable wound around on a diametrically outer side, and an arced turned-back portion as a border portion between the inner wound portion and the outer wound portion.

The present invention allows the flat cable to be drawn out or wound up in accordance with the sliding operation of the attachment target, and also prevents the flat cable from being twisted due to the rotation operation of the attachment target.

This will be described in more detail. In the case where the attachment target of the cable winding device is moved toward one side of the sliding direction (sliding operation) to pull the flat cable, the turned-back portion of the outer circumferential wound portion is moved toward one side of a circumferential direction while the flat cable fed from the inner wound portion. Or, in the case where the flat cable is wound around sparsely like a swirl in the outer circumferential wound portion, the flat cable is wound while being tightened and concurrently, is fed therefrom. In this manner, the flat cable is drawn out toward the outside of the outer circumferential space.

By contrast, in the case where the attachment target of the cable winding device is moved toward the other side of the sliding direction (sliding operation) to push the flat cable into the inside of the outer circumferential space from the guide opening, the turned-back portion of the outer circumferential wound portion is moved toward the other side of the circumferential direction while the flat cable is wound around the inner wound portion. Or, in the case where the flat cable is wound around sparsely like a swirl in the outer circumferential wound portion, the flat cable is wound while being loosened and concurrently, is wound around. In this manner, the flat cable wound up toward the inside of the outer circumferential space.

In the case where the attachment target of the cable winding device is rotated in one direction of the rotation direction (rotation operation), the rotation shaft rotates in the one direction in association with the rotation operation of the attachment target. Therefore, the flat cable is wound around the inner wound portion of the central wound portion. At this point, the turned-back portion of the central wound portion is moved toward one side of the circumferential direction while the flat cable is fed from the outer wound portion. Or, in the case where the flat cable is wound around sparsely like a swirl in the central wound portion, the flat cable is wound while being tightened or loosened. The central wound portion is caused to follow the rotation operation of the attachment target in this manner, so that the flat cable is prevented from being twisted.

By contrast, in the case where the attachment target of the cable winding device is rotated in the other direction of the rotation direction (rotation operation), the rotation shaft rotates in the other direction in association with the rotation operation of the attachment target. Therefore, the flat cable is fed from the inner wound portion of the central wound portion. At this point, the turned-back portion of the central wound portion is moved toward the other side of the circumferential direction while the flat cable is wound around the outer wound portion. Or, in the case where the flat cable is wound around sparsely like a swirl in the central wound portion, the flat cable is wound while being tightened or loosened. The central wound portion is caused to follow the rotation operation of the attachment target in this manner, so that the flat cable is prevented from being twisted.

In an embodiment of the present invention, a rotation table rotatable about the rotation shaft, and a rotation roller rotatable about a direction along the rotation shaft while being supported by the rotation table, may be provided. The rotation roller may be located on an inner circumferential surface side of the turned-back portion.

With the present invention, when the turned-back portion is moved toward one side of the circumferential direction while the flat cable is wound or fed, an inner circumferential surface of the turned-back portion contacts the rotation roller and as a result, pulls the rotation roller. This causes the rotation table to revolve and also causes the rotation roller to rotate in conformation with the feeding of the flat cable. In this manner, the flat cable is allowed to be guided smoothly. In addition, the flat cable is prevented from being abraded as a result of being rubbed.

In an embodiment of the present invention, a guide may be provided at a position away from an outer circumferential surface of the rotation roller in a circumferential direction of the rotation table. The guide may be located on an outer circumferential surface side of the turned-back portion.

With the present invention, when the turned-back portion is moved toward the other side of the circumferential direction while the flat cable is wound or fed, an outer circumferential surface of the turned-back portion contacts the guide and as a result, pushes the guide. This causes the rotation table to revolve and also prevents the flat cable from contacting the rotation roller adjacent thereto. In this manner, the flat cable is allowed to be guided smoothly. In addition, the flat cable is prevented from being abraded as a result of being rubbed.

In an embodiment of the present invention, the holding portion may be an insertion hole through which the flat cable is to be inserted, the insertion hole being formed in the partition.

With the present invention, the central wound portion and the outer circumferential wound portion of the flat cable are formed of one continuous flat cable. In addition, the cable winding device holds the border portion between the central wound portion and the outer circumferential wound portion with certainty with a simple configuration.

In an embodiment of the present invention, a restriction piece restricting a direction in which the flat cable guided out from the holding portion is to be guided out may be provided.

With the present invention, the direction in which the flat cable is to be guided out is restricted with certainty. Therefore, the flat cable is prevented from being subjected to a local load as a result of being bent by the sliding operation or the rotation operation of the attachment target.

In an embodiment of the present invention, the flat cable may be of one flexible flat cable or may include a plurality of flexible flat cables provided in a stacked manner.

With the present invention, the flat cable is bendable with a small bend radius. Therefore, the diameters of the central space and the outer circumferential space are made short, and this allows the cable winding device to be compact. The bent flat cable has such a high elasticity as to restore to an original shape thereof, and therefore, the wound portions are wound while being loosened and are spread only by a repulsive force thereof. This allows the configuration to be simplified.

The present invention is directed to a seat electric power supply device using the above-described cable winding device. The rotation shaft is coupled with a seat capable of making a sliding operation and a rotation operation. One end of the flat cable extended from an inner circumferential portion of the central wound portion is connected with an electric member of the seat, and the other end of the flat cable extended from an outer circumferential portion of the outer circumferential wound portion is connected with an electric member on an electric power supply source side.

The present invention allows the flat cable to be drawn out or wound up in accordance with the sliding operation of the seat, and also prevents the flat cable from being twisted due to the rotation operation of the seat.

### ADVANTAGEOUS EFFECTS OF INVENTION

The present invention provides a cable winding device capable of drawing out or winding up a flat cable in accordance with a sliding operation of an attachment target and capable of preventing the flat cable from being twisted due to a rotation operation of the attachment target, and also provides a seat electric power supply device using such a cable winding device.

### BRIEF DESCRIPTION OF DRAWINGS

FIG. 1 is a perspective view of a seat in a vehicle and the vicinity thereof.
FIG. 2 is a perspective view of a cable winding device.
FIG. 3 is an exploded perspective view of the cable winding device.
FIG. 4 is a plan view of a lower case included in a housing.
FIG. 5 is a plan view of a state where a flat cable is accommodated in the lower case.
FIG. 6 shows an operation in the case where the seat is moved toward a rear side.
FIG. 7 shows an operation in the case where the seat is moved toward a front side.
FIG. 8 shows an operation in the case where the seat is rotated counterclockwise.
FIG. 9 shows an operation in the case where the seat is rotated clockwise.
FIG. 10 is a plan view of a lower case of a cable winding device according to another embodiment.
FIG. 11 is an exploded perspective view of the cable winding device.
FIG. 12 is an exploded perspective view of rotation units.
FIG. 13 is a plan view of a lower case included in a housing.
FIG. 14 is a plan view of a state where a flat cable is accommodated in the lower case.
FIG. 15 shows an operation in the case where the seat is moved toward the rear side.
FIG. 16 shows an operation in the case where the seat is moved toward the front side.
FIG. 17 shows an operation in the case where the seat is rotated counterclockwise.
FIG. 18 shows an operation in the case where the seat is rotated clockwise.
FIG. 19 is a plan view of a lower case of a cable winding device according to still another embodiment.
FIG. 20 is a plan view of a lower case of a cable winding device according to still another embodiment.
FIG. 21 is a plan view of a lower case of a cable winding device according to still another embodiment.
FIG. 22 is a plan view of a lower case of a cable winding device according to still another embodiment.

### DESCRIPTION OF EMBODIMENTS

An example of the present invention will be described in detail with reference to the drawings.

In this application, arrow F represents a front side, arrow B represents a rear side, arrow L represents a left side, and arrow R represents a right side. Arrow U represents an upper side, and arrow D represents a lower side. In this application, a front-rear direction will be represented by X, a left-right direction will be represented by Y, and an up-down direction will be represented by Z.

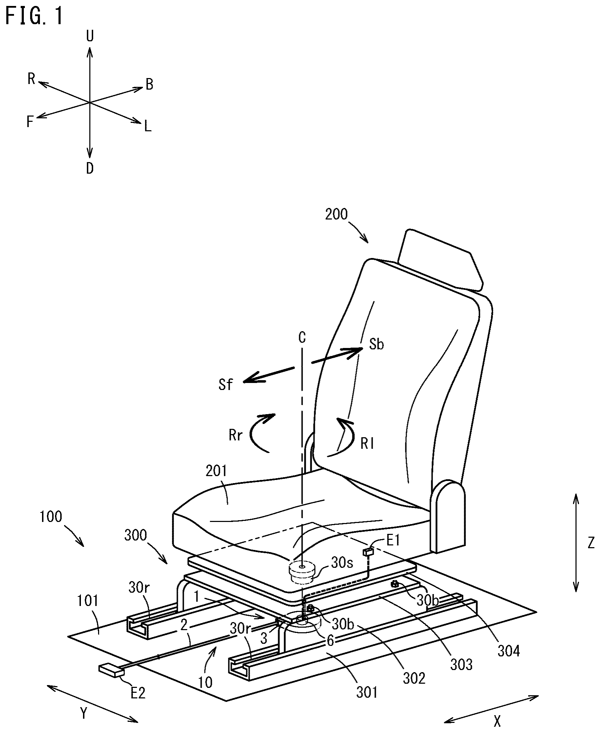

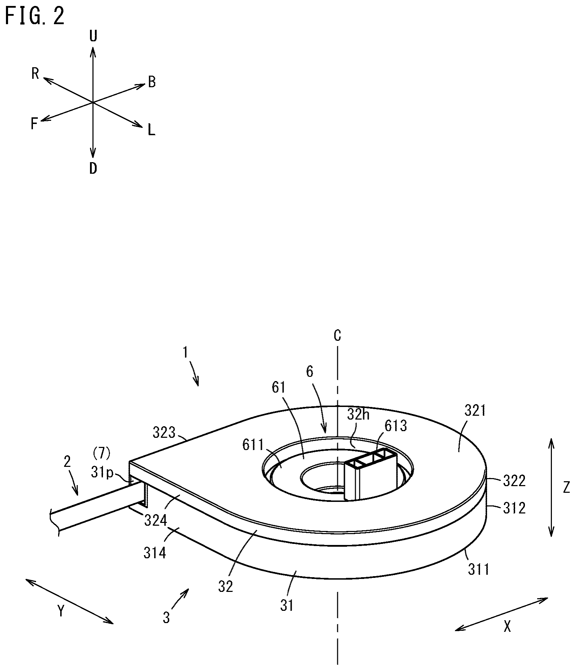

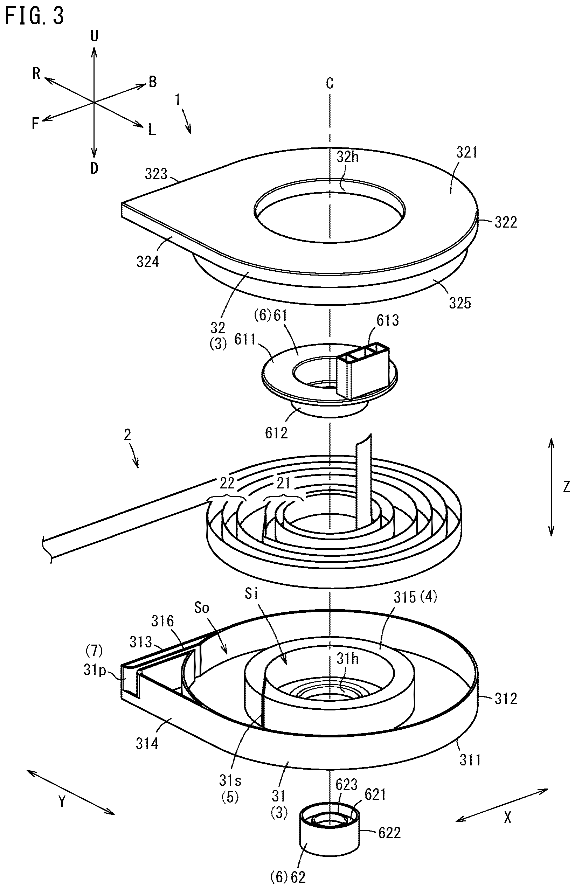

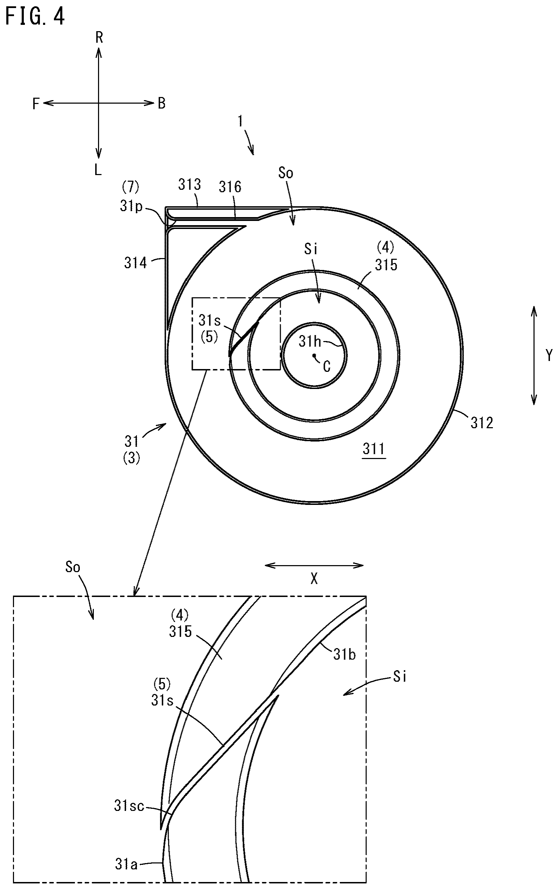

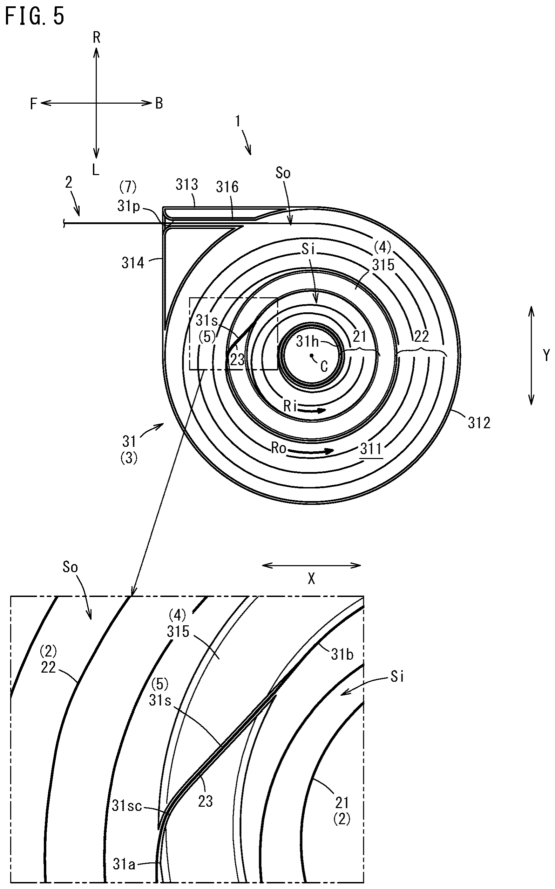

FIG. 1 is a perspective view of a seat 200 in a vehicle 100 and the vicinity thereof. FIG. 2 is a perspective view of a cable winding device 1, and FIG. 3 is an exploded perspective view of the cable winding device 1. FIG. 4 is a plan view of a lower case 31 included in a housing 3, and FIG. 5 is a plan view of a state where a flexible flat cable 2 is accommodated in the lower case 31. FIG. 4 and FIG. 5 each show a partially enlarged view of the lower case 31.

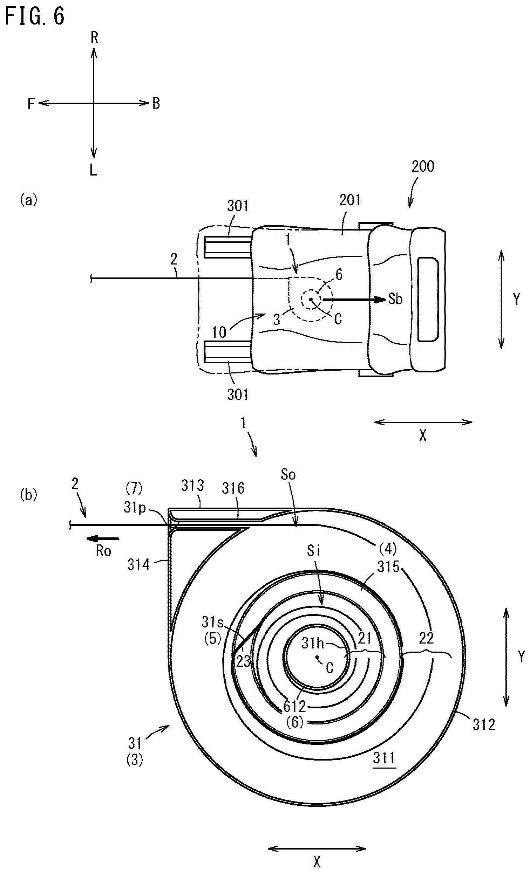

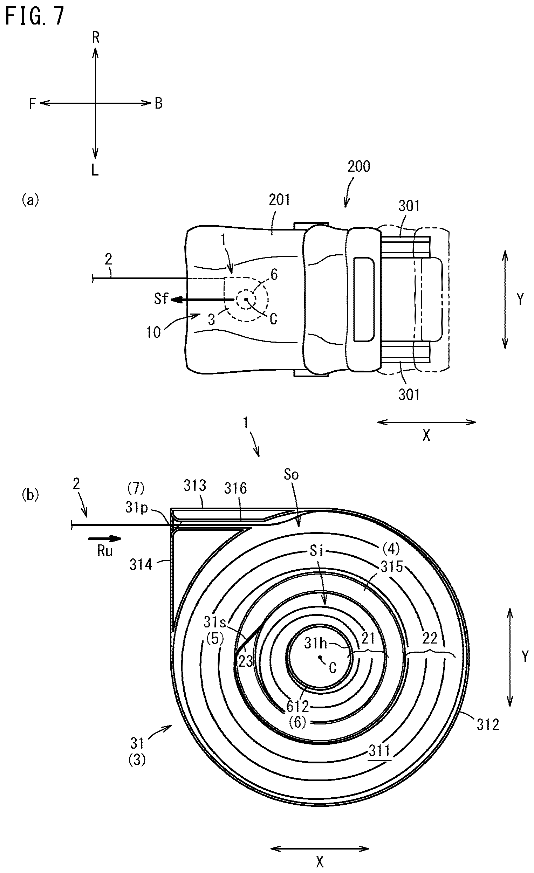

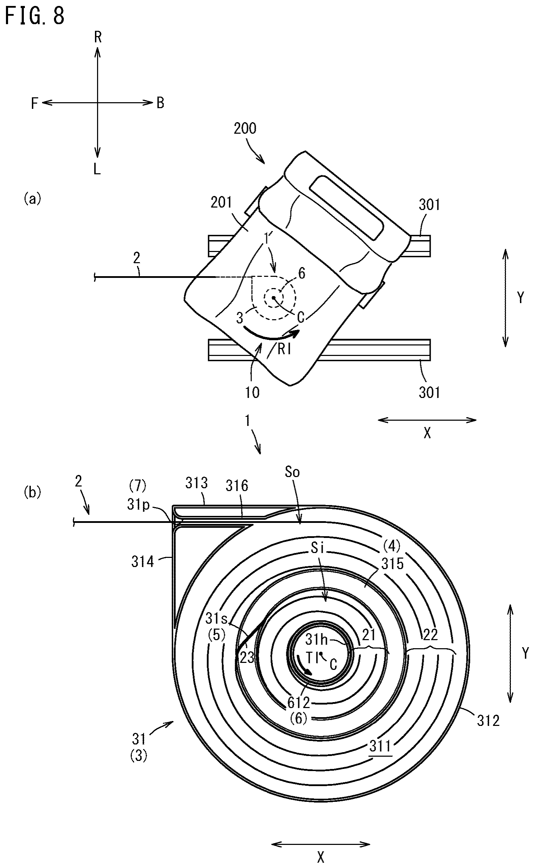

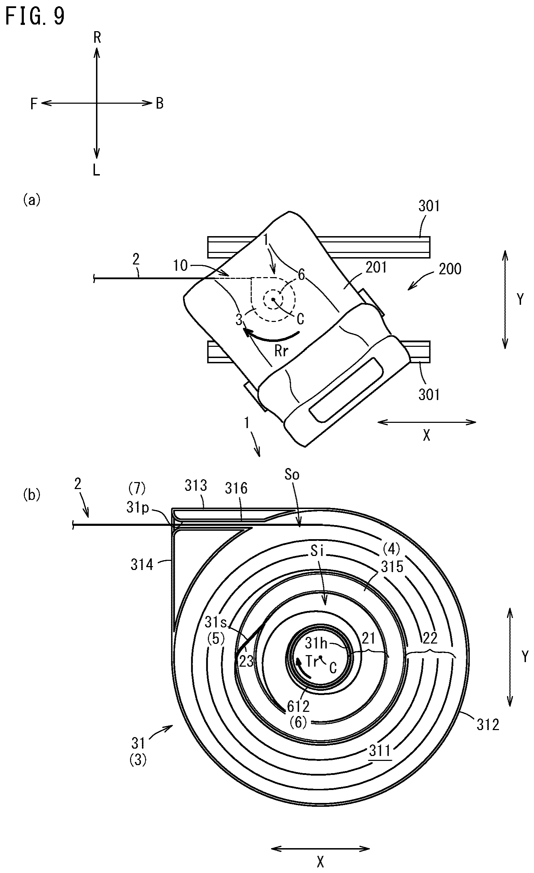

FIG. 6 shows an operation in the case where the seat 200 is moved toward the rear side B, and FIG. 7 shows an operation in the case where the seat 200 is moved toward the front side F. FIG. 8 shows an operation in the case where the seat 200 is rotated in a counterclockwise direction Rl, and FIG. 9 shows an operation in the case where the seat 200 is rotated in a clockwise direction Rr. In each of FIG. 6 through FIG. 9, (a) shows an operation of the seat 200, and (b) shows an operation of the cable winding device 1.

As shown in FIG. 1, the vehicle 100 includes a seat support mechanism 300 supporting the seat 200. The seat support mechanism 300 includes a pair of rails 301, a pair of sliders 302, a lower plate 303, and an upper plate 304.

The rails 301 extend in the front-rear direction X of the vehicle 100. The rails 302 are located parallel to each other while being away from each other by a predetermined distance, and are secured to a floor panel 101 of the vehicle 100. Each of the rails 301 has a track groove 30r formed in a top surface thereof.

The sliders 302 are respectively supported in a state of being fit into the track grooves 30r of the rails 301. Therefore, the sliders 302 are movable in the front-rear direction X (see arrows Sf and Sb). Each of the sliders 302 has bolts 30b protruding toward the upper side U from a top surface thereof.

The lower plate 303 has through-holes formed therein at each of ends thereof in the left-right direction Y, and are supported with the bolts 30b of the sliders 302 being inserted through the through-holes. Therefore, the lower plate 303 is movable in the front-right direction X together with the sliders 302 (see arrows Sf and Sb). A cylindrical rotation shaft 30s is provided in a central portion of the lower plate 303.

The upper plate 304 has a rotation bearing provided in a central portion thereof, and is supported with the rotation shaft 30s of the lower plate 303 being inserted through the rotation bearing. Therefore, the upper plate 304 is movable in the front-rear direction X together with the lower plate 303 (see arrows Sf and Sb), and is rotatable with respect to the lower plate 303 (see arrows Rl and Rr). A seat cushion 201 of the seat 200 is placed and secured to a top surface of the upper plate 304.

With such a configuration, the seat 200 is movable toward the front side F and the rear side B of the vehicle 100 (see Sf and Sb). The seat 200 is rotatable counterclockwise and clockwise of the vehicle 100 (see arrows Rl and Rr). Note that the seat support mechanism 300 is not limited to having any specific configuration. The seat 200 and the seat support mechanism 300 are not limited to being used in a vehicle of an automobile or the like. For example, the seat 200 and the seat support mechanism 300 may be used in, for example, a railroad vehicle, a seacraft or an aircraft.

The lower plate 303 has a seat electric power supply device 10 attached thereto. The seat electric power supply device 10 mainly includes the cable winding device 1, and a rotation shaft 6 included in the cable winding device 1 is coupled to the seat 200 via the rotation shaft 30s of the lower plate 303. One end of the flexible flat cable 2 is connected with an electric member E1 of the seat 200, and the other end of the flexible flat cable 2 is connected with an electric member E2 of the vehicle 100.

With reference to FIG. 2 through FIG. 5, the cable winding device 1 will be described. The cable winding device 1 includes the band-like flexible flat cable 2, the housing 3 accommodating the flexible flat cable 2, and the rotation shaft 6 rotatable about a direction along a width direction of the flexible flat cable 2 (along the up-down direction Z) while holding the flexible flat cable 2.

The flexible flat cable 2 is an electric cable formed to be band-like. The flexible flat cable 2 includes a plurality of conductive members located in parallel to each other and sandwiched by seat-like insulating members. Therefore, the flexible flat cable 2 is bendable with a small bend radius, and has such a high elasticity as to restore to an original shape even if being bent. The flexible flat cable 2 may be of one flexible flat cable or may include a plurality of flexible flat cables provided in a stacked manner.

The flexible flat cable 2 is accommodated in the housing 3 in a state of being wound around like a swirl. In more detail, a central wound portion 21 wound around like a swirl is accommodated in a central space Si of the housing 3, and an outer circumferential wound portion 22 wound around like a swirl is accommodated in an outer circumferential space So of the housing 3. The central wound portion 21 and the outer circumferential wound portion 22 are wound counterclockwise (arrows Ri and Ro in FIG. 5) from a diametrically inner side to a diametrically outer side as seen in a direction from the upper side U, which is along a central axis C.

The housing 3 is a casing accommodating the flexible flat cable 2. The housing 3 includes the lower case 31 having the central space Si and the outer circumferential space So formed therein, and an upper cover 32 fit into the lower case 31 and closing opening ends (openings on the upper side U) of the central space Si and the outer circumferential space So. Hereinafter, the lower case 31 and the upper cover 32 will be described.

The lower case 31 includes a generally circular bottom plate 311, an outer circumferential plate 312 extending toward the upper side U from an outer edge of the bottom plate 311, a right end plate 313 extending toward the front side F from a right end edge of the outer circumferential plate 312, and a front end plate 314 extending toward the right side R from a front end edge of the outer circumferential plate 312. The bottom plate 311 has a through-hole 31h formed therein as being centered around the central axis C, the through-hole 31h running through the bottom plate 311 in the up-down direction Z.

The lower case 31 includes a generally cylindrical middle plate 315 formed as being centered around the central axis C thereof. The middle plate 315 extends toward the upper side U from a position in the middle in a diametrical direction of the bottom plate 311, and divides an inner space of the lower case 31 into the central space Si and the outer circumferential space So. Therefore, the middle plate 315 may be considered as a partition 4 dividing the central space Si and the outer circumferential space So from each other.

The middle plate 315 has an insertion hole 31s formed therein, through which the flexible flat cable 2 is to be inserted. The insertion hole 31s is a narrow slit-like pathway that is formed to be bent from an outer circumferential surface 31a of the middle plate 315 toward the diametrically inner side (see reference sign 31sc in FIG. 4 and FIG. 5) and then to contact an inner circumferential surface 31b of the middle plate 315. The insertion hole 31s sandwiches and holds the inserted flexible flat cable 2 with certainty. Therefore, the insertion hole 31s may be considered as a holding portion 5 holding a border portion 23, of the flexible flat cable 2, which is between the central wound portion 21 accommodated in the central space Si and the outer circumferential wound portion 22 accommodated in the outer circumferential space So.

In addition, a guide pathway 31p for the flexible flat cable 2 is formed in a space enclosed by the outer circumferential plate 312, the right end plate 313 and the front end plate 314. The guide pathway 31p is formed by a pair of guide plates 316 provided in the front-rear direction X. The guide pathway 31p has a rear end that is opened toward the inside on the rear side B (toward the outer circumferential space So) and has a front end opened toward the outside on the front side F. Therefore, the guide pathway 31p may be considered as a guide opening 7 guiding the flexible flat cable 2, which is to be drawn out from the inside toward the outside of the outer circumferential space So or to be wound up from the outside toward the inside of the outer circumferential space So.

The upper cover 32 includes a generally circular lid plate 321, an outer circumferential plate 322 extending toward the lower side D from an outer edge of the lid plate 321, a right end plate 323 extending toward the front side F from a right end edge of the outer circumferential plate 322, and a front end plate 324 extending toward the right side R from a front end edge of the outer circumferential plate 322. The lid plate 321 has a through-hole 32h formed therein as being centered around the central axis C, the through-hole 32h running through the lid plate 321 in the up-down direction Z.

The upper cover 32 includes a generally cylindrical inner circumferential plate 325 formed as being centered around the central axis C thereof. The inner circumferential plate 325 extends toward the lower side D from a position in the middle in a diametrical direction of the lid plate 321. The inner circumferential plate 325 has an outer diameter that is set to be slightly shorter than that of the lower case 31. Therefore, in a state where the upper cover 32 is attached to the lower case 31, the outer circumferential plate 312 and the inner circumferential plate 325 are fit to each other.

With such a configuration, the upper cover 32 closes the opening ends (openings on the upper side U) of the central space Si and the outer circumferential space So. In this state, tips of the outer circumferential plate 312 of the lower case 31 and the outer circumferential plate 322 of the upper cover 32 contact each other. Similarly, tips of the right end plate 313 of the lower case 31 and the right end plate 323 of the upper cover 32 contact each other, and tips of the front end plate 314 of the lower case 31 and the front end plate 324 of the upper cover 32 contact each other.

In the cable winding device 1 according to this embodiment, the partition 4 is provided in the lower case 31 and a tip of the partition 4 contacts the lid plate 321 of the upper cover 32. Alternatively, the partition 4 may be provided in the upper cover 32 such that the tip of the partition 4 contacts the bottom plate 311 of the lower case 31. In this case also, the insertion hole 31s formed in the partition 4 may be considered as the holding portion 5. The guide opening 7 may be provided in the upper cover 32.

Now, the rotation shaft 6 will be described. The rotation shaft 6 is a rotation member rotatable about a direction along the width direction of the flexible flat cable 2 (along the up-down direction Z) while holding the flexible flat cable 2. The rotation shaft 6 includes a rotator 61 holding the flexible flat cable 2 and a sleeve 62 acting as an insertion shaft for the rotator 61. Hereinafter, the rotator 61 and the sleeve 62 will be described.

The rotator 61 includes a generally annular lid plate 611 and a tubular plate 612 extending toward the lower side D from an inner edge of the lid plate 611. A connector holder 613 extending toward the upper side U is formed on a portion of a circumferential direction of the lid plate 611. The connector holder 613 accommodates connectors (not shown) electrically connected with the conductors of the flexible flat cable 2.

The flexible flat cable 2 is wound around the tubular plate 612 like a swirl. Therefore, the tubular plate 612 has a radius set to be longer than the radius at which the flexible flat cable 2 is permitted to bend. The tubular plate 612 has a length in the up-down direction Z that is set to be longer than that of the flexible flat cable 2 in the width direction (in the up-down direction Z). The flexible flat cable 2 is bent toward the upper side U in an inner circumferential portion, which is at an innermost position of the central wound portion 21, and the above-mentioned connectors (not shown) are attached to an end of the bent portion.

The sleeve 62 includes a generally annular bottom plate 621 and a tubular plate 622 extending toward the upper side U and the lower side D from an outer edge of the bottom plate 621. A bolt guide 623 extending toward the upper side U is formed on the bottom plate 621, and a bolt (not shown) to be engaged with the rotation shaft 30s of the lower plate 303 is inserted into the bolt guide 623.

The tubular plate 622 is to be inserted into the through-hole 31h formed in a central portion of the lower case 31. Therefore, the tubular plate 622 has an outer diameter set to be slightly shorter than an inner diameter of the through-hole 31h. The tubular plate 622 has a length in the up-down direction Z that is set to be sufficiently longer than that of the through-hole 31 in the up-down direction Z. In more detail, the tubular plate 622 extends toward the lower side D to be sufficiently long. Therefore, a head of the bolt (not shown) mentioned above is accommodated inside the tubular plate 622. Note that the rotation shaft 6 merely needs to rotate in association with the seat 200, and is not limited to having such a configuration.

As described above, the cable winding device 1 includes the band-like flexible flat cable 2, the housing 3 accommodating the flexible flat cable 2, the partition 4 dividing the inner space of the housing 3 into the central space Si and the outer circumferential space So, and the holding portion 5 holding the border portion 23, of the flexible flat cable 2, which is between the portion accommodated in the central space Si and the portion accommodated in the outer circumferential space So. The rotation shaft 6 rotatable about a direction along the width direction of the flexible flat cable 2 (along the up-down direction Z) while holding the flexible flat cable 2 is provided in a central portion of the central space Si. The guide opening 7 guiding the flexible flat cable 2, which is to be drawn out from the inside toward the outside of the outer circumferential space So or to be wound up from the outside toward the inside of the outer circumferential space So, is provided at an outer edge of the outer circumferential space So. The flexible flat cable 2 includes the central wound portion 21 wound like a swirl about the rotation shaft 6 in the central space Si and the outer circumferential wound portion 22 wound like a swirl about the partition 4 in the outer circumferential space So. One end of the flexible flat cable 2 extended from the inner circumferential portion of the central wound portion 21 is connected with the electric member E1 of the seat 200 capable of making the sliding operation and the rotation operation, and the other end of the flexible flat cable 2 extended from the outer circumferential portion of the outer circumferential wound portion 22 is connected with the electric member E2 on the side of the vehicle 100.

The cable winding device 1 having such a configuration allows the flexible flat cable 2 to be drawn out or wound up in accordance with the sliding operation of the seat 200, and also prevents the flexible flat cable 2 from being twisted due to the rotation operation of the seat 200.

This will be described in more detail. As shown in FIG. 6, in the case where the seat 200 is moved toward the rear side B (sliding operation) to pull the flexible flat cable 2 (see arrow Ro), the outer circumferential wound portion 22 in the outer circumferential space So is wound while being tightened and is drawn out toward the outside of the outer circumferential space So. By contrast, as shown in FIG. 7, in the case where the seat 200 is moved toward the front side F (sliding operation) to push the flexible flat cable 2 into the inside of the outer circumferential space So from the guide opening 7 (see arrow Ru), the outer circumferential wound portion 22 in the outer circumferential space So is wound while being loosened and is wound up toward the inside of the outer circumferential space So.

As shown in FIG. 8, in the case where the seat 200 is rotated in the counterclockwise direction Rl (rotation operation) (see arrow Tl), the rotation shaft 6 rotates in the counterclockwise direction Rl in association with the rotation operation of the seat 200. Therefore, the central wound portion 21 in the central space Si is wound while being loosened. The central wound portion 21 is caused to follow the rotation operation of the seat 200 in this manner, so that the flexible flat cable 2 is prevented from being twisted. By contrast, in the case where the seat 200 is rotated in the clockwise direction Rr (rotation operation) (see arrow Tr), the rotation shaft 6 is rotated in the clockwise direction Rr in association with the rotation operation of the seat 200. Therefore, the central wound portion 21 in the central space Si is wound while being tightened. The central wound portion 21 is caused to follow the rotation operation of the seat 200 in this manner, so that the flexible flat cable 2 is prevented from being twisted.

In the cable winding device 1, the central wound portion 21 and the outer circumferential wound portion 22 are wound in the same direction as each other (see arrows Ri and Ro in FIG. 5).

With the cable winding device 1 having such a configuration, when the central wound portion 21 of the flexible flat cable 2 is wound while being tightened or loosened, the border portion 23 between the central wound portion 21 and the outer circumferential wound portion 22 is prevented from being subjected to a local load. In addition, also when the outer circumferential wound portion 22 of the flexible flat cable 2 is wound while being tightened or loosened, the border portion 23 between the central wound portion 21 and the outer circumferential wound portion 22 is prevented from being subjected to a local load.

In the cable winding device 1, the holding portion 5 is the insertion hole 31s, which is formed in the partition 4 and into which the flexible flat cable 2 is to be inserted.

With the cable winding device 1 having such a configuration, the central wound portion 21 and the outer circumferential wound portion 22 of the flexible flat cable 2 are formed of one continuous flexible flat cable 2. In addition, the cable winding device 1 holds the border portion 23 between the central wound portion 21 and the outer circumferential wound portion 22 with certainty with a simple configuration.

In the cable winding device 1, the flexible flat cable 2 is of one flexible flat cable or includes a plurality of the flexible flat cables provided in a stacked manner.

With the cable winding device 1 having such a configuration, the flexible flat cable 2 is bendable with a small bend radius. Therefore, the diameters of the central space Si and the outer circumferential space So are made short, and this allows the cable winding device 1 to be compact. The bent flexible flat cable 2 has such a high elasticity as to restore to an original shape thereof, and therefore, the wound portions 21 and 22 are wound while being loosened and are spread only by a repulsive force thereof. This allows the configuration to be simplified.

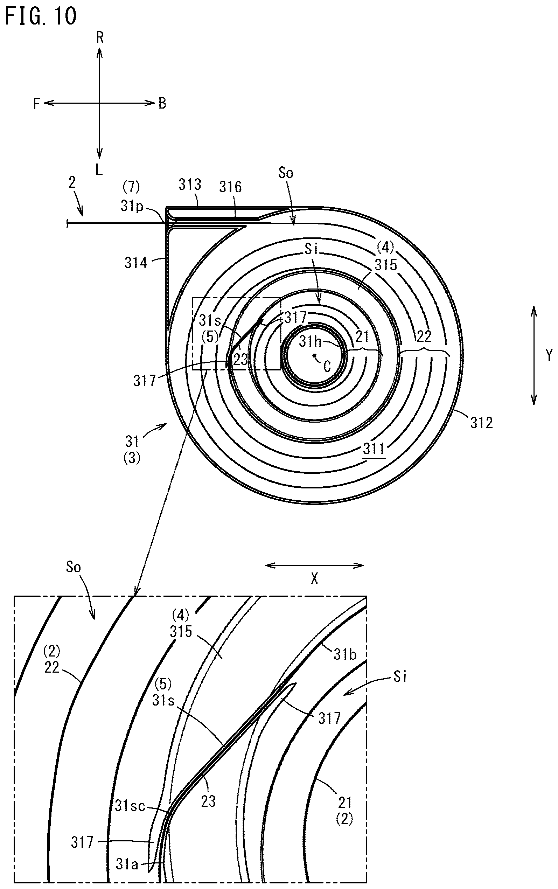

In the cable winding device 1 according to this embodiment, a direction in which the flexible flat cable 2 is to be guided out is restricted by the insertion hole 31s. Alternatively, as shown in FIG. 10, the direction in which the flexible flat cable 2 is to be guided out may be restricted by a restriction piece 317.

That is, the flexible flat cable 2 may be appropriately bent by the insertion hole 31s to restrict the direction in which the flexible flat cable 2 is to be guided out. Alternatively, the restriction piece 317 may be provided, which restricts the direction in which the flexible flat cable 2, guided out from the holding portion 5, is to be guided out.

Even with the cable winding device 1 having such a configuration, the direction in which the flexible flat cable 2 is to be guided out is restricted with certainty. Therefore, the flexible flat cable 2 is prevented from being subjected to a local load as a result of being bent by the sliding operation or the rotation operation of the seat 200.

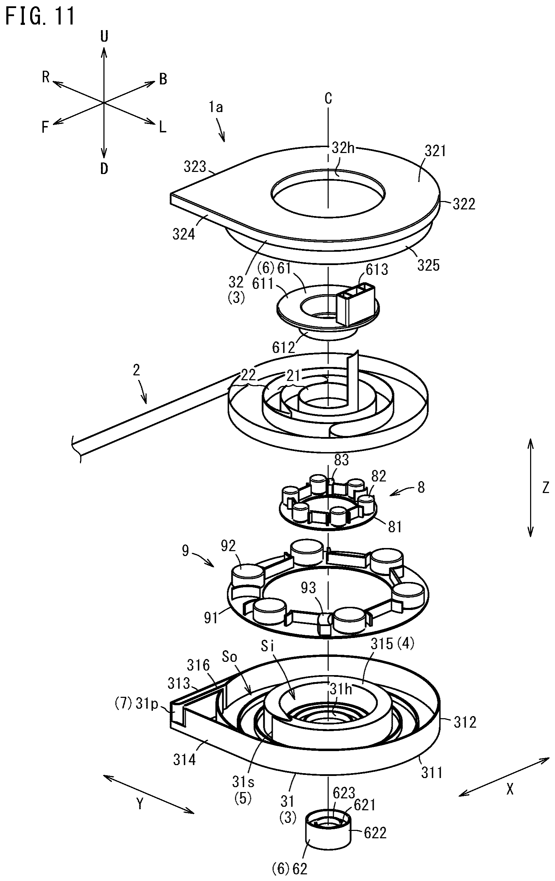

Now, with reference to FIG. 11 through FIG. 19, a cable winding device 1a will be described, which is capable of drawing out or winding up the flexible flat cable 2 in accordance with the sliding operation of the seat 200 and also capable of preventing the flexible flat cable 2 from being twisted due to the rotation operation of the seat 200, like the cable winding device 1.

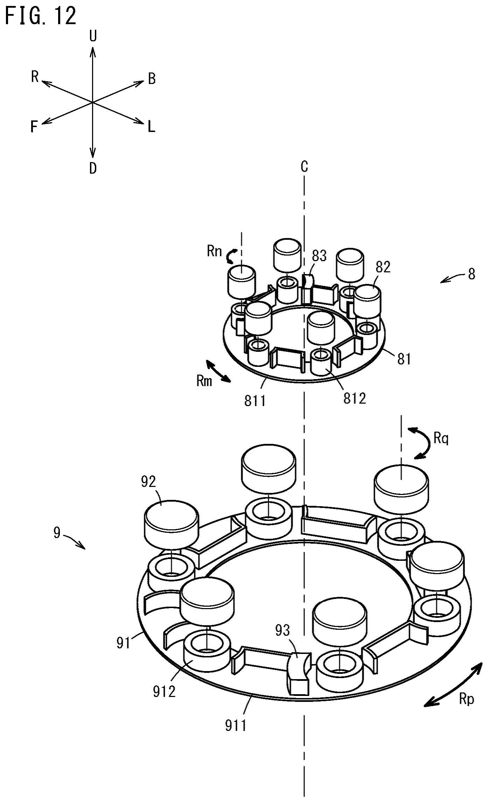

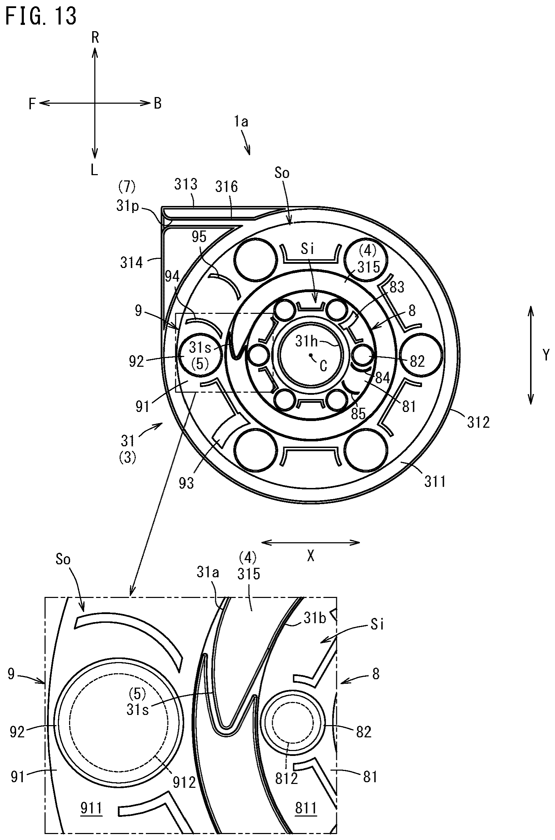

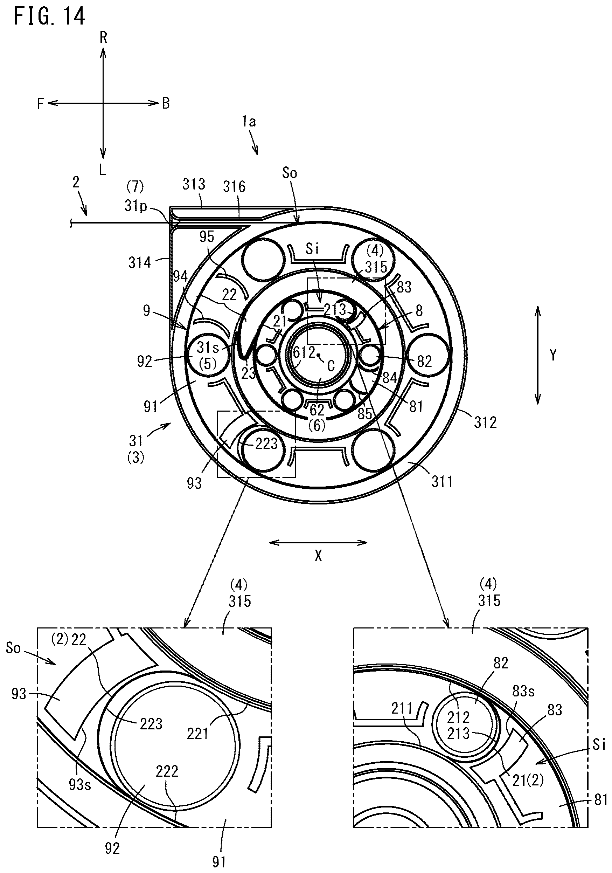

FIG. 11 is an exploded perspective view of the cable winding device 1a, and FIG. 12 is an exploded perspective view of rotation units 8 and 9. FIG. 13 is a plan view of the lower case 31 included in the housing 3, and FIG. 14 is a plan view of a state where the flexible flat cable 2 is accommodated in the lower case 31. FIG. 13 and FIG. 14 each show a state where the rotation units 8 and 9 are accommodated in the lower case 31.

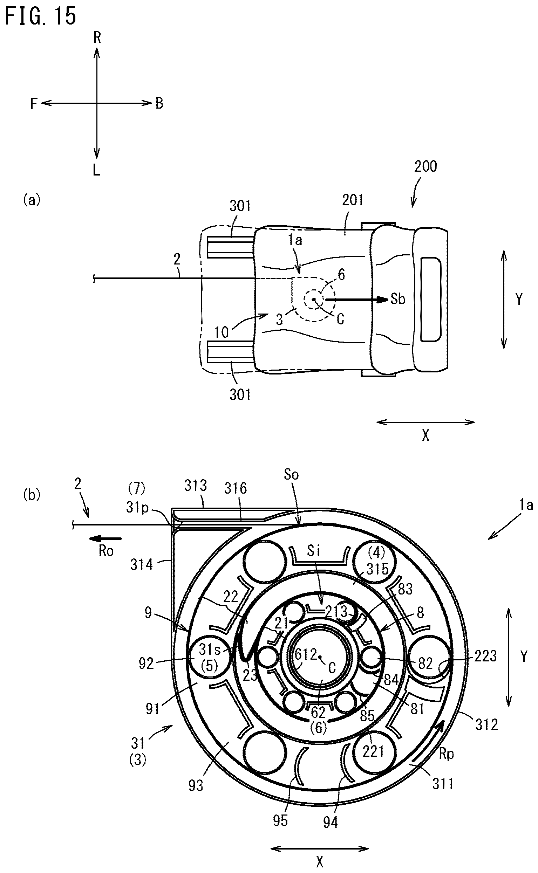

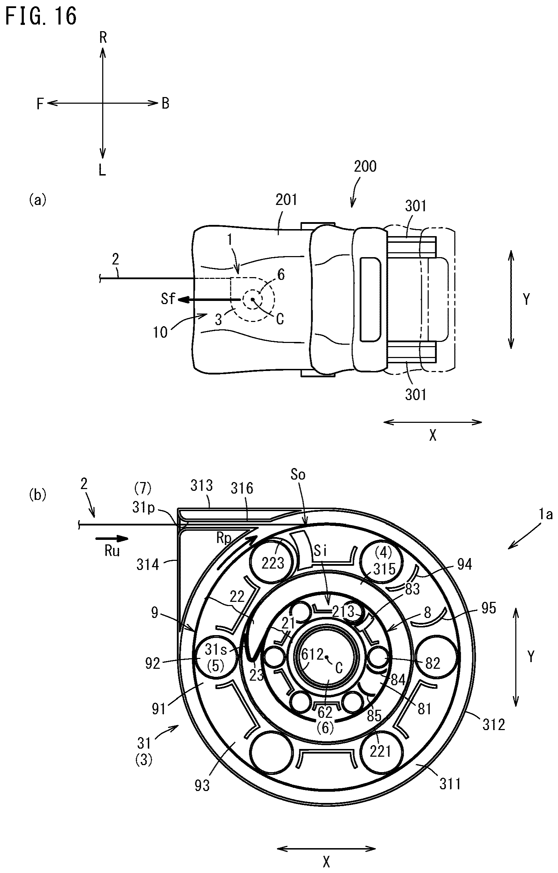

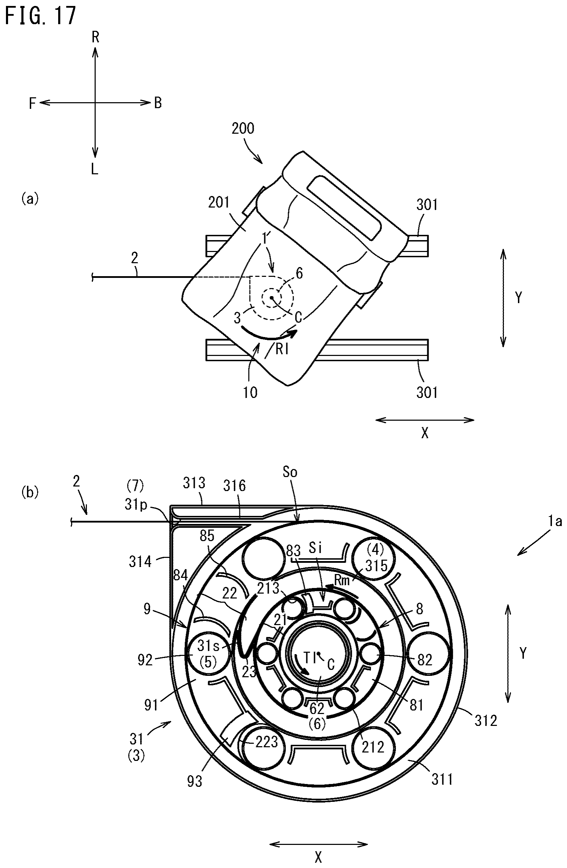

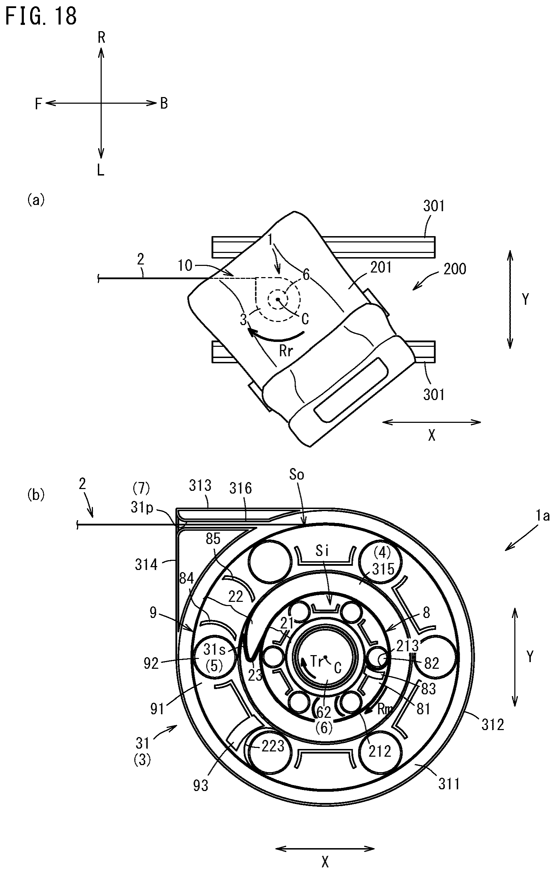

FIG. 15 shows an operation in the case where the seat 200 is moved toward the rear side B, and FIG. 16 shows an operation in the case where the seat 200 is moved toward the front side F. FIG. 17 shows an operation in the case where the seat 200 is rotated in the counterclockwise direction Rl, and FIG. 18 shows an operation in the case where the seat 200 is rotated in the clockwise direction Rr. In each of FIG. 15 through FIG. 18, (a) shows an operation of the seat 200, and (b) shows an operation of the cable winding device 1.

In the following description of the cable winding device 1a, elements that are the same as, or substantially the same as, those of the cable winding device 1 will bear the same reference signs thereto. Regarding an element that does not need to be specifically described in addition to the description made for the cable winding device 1, such a description will be omitted. Regarding an element that needs to be specifically described in addition to the description made for the cable winding device 1, such an element will be described.

With reference to FIG. 11 through FIG. 14, the cable winding device 1a will be described. Like the cable winding device 1, the cable winding device 1a includes the band-like flexible flat cable 2, the housing 3 accommodating the flexible flat cable 2, and the rotation shaft 6 rotatable about a direction along the width direction of the flexible flat cable 2 (along the up-down direction Z) while holding the flexible flat cable 2. The cable winding device 1a further includes the two rotation units 8 and 9.

In the cable winding device 1a, the flexible flat cable 2 is accommodated in the housing 3 in a state of being wound around in a predetermined form. In more detail, the central wound portion 21, which is a wound portion on a central side, is accommodated in the central space Si of the housing 3, and the outer circumferential wound portion 22, which is a wound portion on an outer circumferential side, is accommodated in the outer circumferential space So of the housing 3. Now, the central wound portion 21 and the outer circumferential wound portion 22 will be described in more detail.

The central wound portion 21 includes an inner wound portion 211, which is a portion of the flexible flat cable 2 wound on the diametrically inner side of the central space Si, an outer wound portion 212, which is a portion of the flexible flat cable 2 wound on the diametrically outer side of the central space Si, and an arced turned-back portion 213, which is a border portion between the inner wound portion 211 and the outer wound portion 212. The inner wound portion 211 and the outer wound portion 212 are wound in opposite directions to each other as seen in a direction from the upper side U, which is along the central axis C.

The outer circumferential wound portion 22 includes an inner wound portion 221, which is a portion of the flexible flat cable 2 wound on the diametrically inner side of the outer circumferential space So, an outer wound portion 222, which is a portion of the flexible flat cable 2 wound on the diametrically outer side of the outer circumferential space So, and an arced turned-back portion 223, which is a border portion between the inner wound portion 221 and the outer wound portion 222. The inner wound portion 221 and the outer wound portion 222 are wound in opposite directions to each other as seen in a direction from the upper side U, which is along the central axis C.

In the cable winding device 1a according to this embodiment, the outer wound portion 212 of the central wound portion 21 and the inner wound portion 221 of the outer circumferential wound portion 22 are wound while having the middle plate 315 described below therebetween, and are wound in opposite directions to each other as seen in a direction from the upper side U, which is along the central axis C. Note that the outer wound portion 212 and the inner wound portion 221 may be wound in the same direction as each other.

In the cable winding device 1a, the lower case 31 includes the generally cylindrical middle plate 315 formed as being centered around the central axis C thereof. The middle plate 315 extends toward the upper side U from a position in the middle in the diametrical direction of the bottom plate 311, and divides the inner space of the lower case 31 into the central space Si and the outer circumferential space So. Therefore, the middle plate 315 may be considered as the partition 4 dividing the central space Si and the outer circumferential space So from each other.

The middle plate 315 has the insertion hole 31s formed therein, through which the flexible flat cable 2 is to be inserted. The insertion hole 31s is a narrow slit-like pathway that is formed to be mildly bent from the outer circumferential surface 31a of the middle plate 315 toward the diametrically inner side and then to be turned back to contact the inner circumferential surface 31b of the middle plate 315. The flexible flat cable 2 inserted through the insertion hole 31s is sandwiched and held with certainty. Therefore, the insertion hole 31s may be considered as the holding portion 5 holding the border portion 23, of the flexible flat cable 2, which is between the central wound portion 21 accommodated in the central space Si and the outer circumferential wound portion 22 accommodated in the outer circumferential space So.

In the cable winding device 1a, the flexible flat cable 2 is wound around an outer circumferential surface of the tubular plate 612. Therefore, the tubular plate 612 has a radius set to be longer than the radius at which the flexible flat cable 2 is permitted to bend. The tubular plate 612 has a length in the up-down direction Z that is set to be longer than that of the flexible flat cable 2 in the width direction (in the up-down direction Z). The flexible flat cable 2 is bent toward the upper side U in an inner circumferential portion, which is at an innermost position of the central wound portion 21, and the above-mentioned connectors (not shown) are attached to an end of the bent portion.

Now, the rotation unit 8 accommodated in the central space Si will be described. The rotation unit 8 includes a rotation table 81 rotatable about the rotation shaft 6 and rotation rollers 82 rotatable about a direction along the rotation shaft 6 (about the up-down direction Z) while being supported by the rotation table 81. The rotation unit 8 also includes a guide 83 provided at a position away from outer circumferential surfaces of the rotation rollers 82 in a circumferential direction.

The rotation table 81 is a generally annular member. The rotation table 81 is rotatable counterclockwise or clockwise about the rotation shaft 6 (see arrow Rm in FIG. 12), and includes an annular plate 811 and six support shafts 812 formed on a top surface of the annular plate 811. The support shafts 812 are each a cylindrical protruding portion protruding toward the upper side U from the annular plate 811. The support shafts 812 are located at an equal interval in the circumferential direction.

The rotation rollers 82 are each a generally cylindrical member. The rotation rollers 82 are revolvable together with the rotation table 81 (see arrow Rm in FIG. 12), and are respectively rotatable counterclockwise or clockwise about the support shafts 812 (see arrow Rn in FIG. 12). All the rotation rollers 82 are of the same size, and one of the rotation rollers 82 is located on an inner circumferential surface side of the arced turned-back portion 213, which is the border portion between the inner wound portion 211 and the outer wound portion 212 (see a partially enlarged view of FIG. 14).

The guide 83 is an arced wall formed on the rotation table 81. Therefore, the guide 83 revolves integrally with the rotation table 81 (see arrow Rm in FIG. 12). The guide 83 has an arced shape such that a facing surface 83s thereof facing the rotation roller 82 is bent so as to be along the outer circumferential surface of the rotation roller 82. The guide 83 is located on an outer circumferential surface side of the arced turned-back portion 213, which is the border portion between the inner wound portion 211 and the outer wound portion 212 (see the partially enlarged view of FIG. 14).

Now, the rotation unit 9 accommodated in the outer circumferential space So will be described. The rotation unit 9 includes a rotation table 91 rotatable about the rotation shaft 6 and rotation rollers 92 rotatable about a direction along the rotation shaft 6 (about the up-down direction Z) while being supported by the rotation table 91. The rotation unit 9 also includes a guide 93 provided at a position away from outer circumferential surfaces of the rotation rollers 92 in a circumferential direction.

The rotation table 91 is a generally annular member. The rotation table 91 is rotatable counterclockwise or clockwise about the rotation shaft 6 (see arrow Rp in FIG. 12), and includes an annular plate 911 and six support shafts 912 formed on a top surface of the annular plate 911. The support shafts 912 are each a cylindrical protruding portion protruding toward the upper side U from the annular plate 911. The support shafts 912 are located at an equal interval in the circumferential direction.

The rotation rollers 92 are each a generally cylindrical member. The rotation rollers 92 are revolvable together with the rotation table 91 (see arrow Rp in FIG. 12), and are respectively rotatable counterclockwise or clockwise about the support shafts 912 (see arrow Rq in FIG. 12). All the rotation rollers 92 are of the same size, and one of the rotation rollers 92 is located on an inner circumferential surface side of the arced turned-back portion 223, which is the border portion between the inner wound portion 221 and the outer wound portion 222 (see a partially enlarged view of FIG. 14).

The guide 93 is an arced wall formed on the rotation table 91. Therefore, the guide 93 revolves integrally with the rotation table 91 (see arrow Rp in FIG. 12). The guide 93 has an arced shape such that a facing surface 93s thereof facing the rotation roller 92 is bent so as to be along the outer circumferential surface of the rotation roller 92. The guide 93 is located on an outer circumferential surface side of the arced turned-back portion 223, which is the border portion between the inner wound portion 221 and the outer wound portion 222 (see the partially enlarged view of FIG. 14).

The rotation table 81 included in the rotation unit 8 also has guides 84 and 85 provided thereon so as to be adjacent to each other, in addition to the guide 83 (see FIG. 13 and FIG. 14). The rotation table 91 included in the rotation unit 9 also has guides 94 and 95 provided thereon so as to be adjacent to each other, in addition to the guide 93 (see FIG. 13 and FIG. 14). The guides 84, 95, 94 and 95 will be described below in more detail.

As described above, the cable winding device 1a includes the band-like flexible flat cable 2, the housing 3 accommodating the flexible flat cable 2 in a state where the flexible flat cable 2 is wound around like a swirl, the partition 4 dividing the inner space of the housing 3 into the central space Si and the outer circumferential space So, and the holding portion 5 holding the border portion 23, of the flexible flat cable 2, which is between the portion accommodated in the central space Si and the portion accommodated in the outer circumferential space So. The rotation shaft 6 rotatable about a direction along the width direction of the flexible flat cable 2 (along the up-down direction Z) while holding the flexible flat cable 2 is provided in the central portion of the central space Si. The guide opening 7 guiding the flexible flat cable 2, which is to be drawn out from the inside toward the outside of the outer circumferential space So or to be wound up from the outside toward the inside of the outer circumferential space So, is provided at an outer edge of the outer circumferential space So. The flexible flat cable 2 includes the central wound portion 21 wound around in the central space Si and the outer circumferential wound portion wound around in the outer circumferential space So. One end of the flexible flat cable 2 extended from the inner circumferential portion of the central wound portion 21 is connected with the electric member E1 of the seat 200 capable of making the sliding operation and the rotation operation, and the other end of the flexible flat cable 2 extended from the outer circumferential portion of the outer circumferential wound portion 22 is connected with the electric member E2 on the side of the vehicle 100. The central wound portion 21 and the outer circumferential wound portion 22 respectively include the inner wound portions 211 and 221 of the flexible flat cable 2 wound around on the diametrically inner side, the outer wound portions 212 and 222 of the flexible flat cable 2 wound around on the diametrically outer side, and the arced turned-back portions 213 and 223 as the border portions between the inner wound portions 211 and 221 and the outer wound portions 212 and 222.

The cable winding device 1a having such a configuration allows the flexible flat cable 2 to be drawn out or wound up in accordance with the sliding operation of the seat 200, and also prevents the flexible flat cable 2 from being twisted due to the rotation operation of the seat 200.

This will be described in more detail. As shown in FIG. 15, in the case where the seat 200 is moved toward the rear side B (sliding operation) to pull the flexible flat cable 2 (see arrow Ro), the turned-back portion 223 of the outer circumferential wound portion 22 is moved counterclockwise (see arrow Rp) while the flexible flat cable 2 is fed from the inner wound portion 223. In this manner, the flexible flat cable 2 is drawn out toward the outside of the outer circumferential space So.

By contrast, as shown in FIG. 16, in the case where the seat 200 is moved toward the front side F (sliding operation) to push the flexible flat cable 2 into the inside of the outer circumferential space So from the guide opening 7 (see arrow Ru), the turned-back portion 223 of the outer circumferential wound portion 22 is moved clockwise (see arrow Rp) while the flexible flat cable 2 is wound around the inner wound portion 221. In this manner, the flexible flat cable 2 is wound up toward the inside of the outer circumferential space So.

As shown in FIG. 17, in the case where the seat 200 is rotated in the counterclockwise direction Rl (rotation operation) (see arrow Tl), the rotation shaft 6 rotates in the counterclockwise direction Rl in association with the rotation operation of the seat 200. Therefore, the flexible flat cable 2 is wound around the inner wound portion 211 of the central wound portion 21. At this point, the turned-back portion 213 of the central wound portion 21 is moved counterclockwise while the flexible flat cable 2 is fed from the outer wound portion 212. The central wound portion 21 is caused to follow the rotation operation of the seat 200 in this manner, so that the flexible flat cable 2 is prevented from being twisted.

By contrast, as shown in FIG. 18, in the case where the seat 200 is rotated in the clockwise direction Rr (rotation operation) (see arrow Tr), the rotation shaft 6 rotates in the clockwise direction Rr in association with the rotation operation of the seat 200. Therefore, the flexible flat cable 2 is fed from the inner wound portion 211 of the central wound portion 21. At this point, the turned-back portion 213 of the central wound portion 21 is moved clockwise while the flexible flat cable 2 is wound around the outer wound portion 212. The central wound portion 21 is caused to follow the rotation operation of the seat 200 in this manner, so that the flexible flat cable 2 is prevented from being twisted.

In the cable winding device 1a, the rotation tables 81 and 91 rotatable about the rotation shaft 6 and the rotation rollers 82 and 92 rotatable about a direction along the rotation shaft 6 (about the up-down direction Z) while respectively being supported by the rotation tables 81 and 91 are provided. The rotation rollers 82 and 92 are respectively located on the inner circumferential surface side of the turned-back portions 213 and 223.

With the cable winding device 1a having such a configuration, when the turned-back portions 213 and 223 are moved counterclockwise while the flexible flat cable 2 is wound or fed, inner circumferential surfaces of the turned-back portions 213 and 223 respectively contact the rotation rollers 82 and 92 and as a result, pull the rotation rollers 82 and 92. This causes the rotation tables 81 and 91 to revolve and also causes the rotation rollers 82 and 92 to rotate in conformation with the feeding of the flexible flat cable 2. In this manner, the flexible flat cable 2 is allowed to be guided smoothly. In addition, the flexible flat cable 2 is prevented from being abraded as a result of being rubbed.

In the cable winding device 1a, the guides 83 and 93 are respectively provided on the rotation tables 81 and 91, at positions away from the outer circumferential surfaces of the rotation rollers 82 and 92 in the circumferential direction, and are respectively located on the outer circumferential surface side of the turned-back portions 213 and 223.

With the cable winding device 1a having such a configuration, when the turned-back portions 213 and 223 are moved clockwise while the flexible flat cable 2 is wound or fed, the outer circumferential surfaces of the turned-back portions 213 and 223 respectively contact the guides 83 and 93 and as a result, push the guides 83 and 93. This causes the rotation tables 81 and 91 to revolve and also prevents the flexible flat cable 2 from contacting the rotation rollers 82 and 92, etc. adjacent thereto. In this manner, the flexible flat cable 2 is allowed to be guided smoothly. In addition, the flexible flat cable 2 is prevented from being abraded as a result of being rubbed.

In the cable winding device 1a, the holding portion 5 is the insertion hole 31s, which is formed in the partition 4 and into which the flexible flat cable 2 is to be inserted.

With the cable winding device 1a having such a configuration, the central wound portion 21 and the outer circumferential wound portion 22 of the flexible flat cable 2 are formed of one continuous flexible flat cable 2. In addition, the cable winding device 1a holds the border portion 23 between the central wound portion 21 and the outer circumferential wound portion 22 with certainty with a simple configuration.

In the cable winding device 1a, the flexible flat cable 2 is of one flexible flat cable or includes a plurality of the flexible flat cables provided in a stacked manner.

With the cable winding device 1a having such a configuration, the flexible flat cable 2 is bendable with a small bend radius. Therefore, the diameters of the central space Si and the outer circumferential space So are made short, and this allows the cable winding device 1a to be compact. The bent flexible flat cable 2 has such a high elasticity as to restore to an original shape thereof, and therefore, the wound portions 21 and 22 are wound while being loosened and are spread only by a repulsive force thereof. This allows the configuration to be simplified.

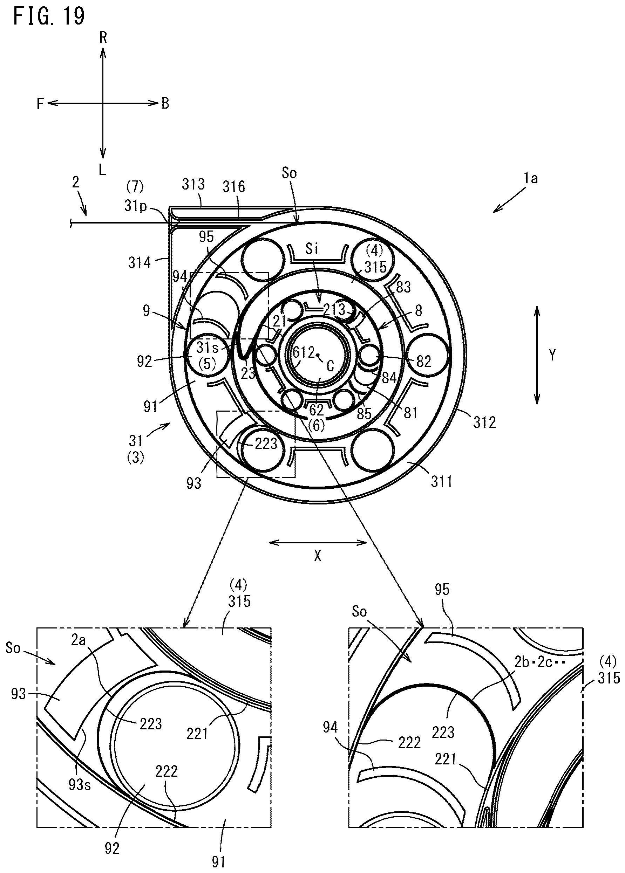

In the case where as shown in FIG. 19, the flexible flat cable 2 includes a plurality of flexible flat cables provided in a stacked manner, one flexible flat cable 2a of the flexible flat cables is routed between the rotation rollers 82 and 92 and the guides 83 and 93, whereas the other flexible flat cables 2b, 2c, ... are routed between the guides 84 and 95 and the guides 85 and 95. At this point, only the flexible flat cable 2a may contact the rotation rollers 82 and 92 or the guides 83 and 93.

With such a configuration, the stacked flexible flat cables, even if being bent along the rotation rollers 82 and 92 or bent along the guides 83 and 93, are prevented from being abraded as a result of being rubbed. The other flexible flat cables 2b, 2c ... may be routed in different routes, instead of being routed between the guides 84 and 94 and the guides 85 and 95. In the case where, for example, four flexible flat cables are stacked, such four flexible flat cables may be routed at every 90 degrees as being centered around the rotation shaft 6.

The cable winding device according to the present invention corresponds to the cable winding device 1, 1a in the above-described embodiment; and similarly,
the flat cable corresponds to the flexible flat cable 2;
the housing corresponds to the housing 3;
the partition corresponds to the partition 4;
the holding portion corresponds to the holding portion 5;
the rotation shaft corresponds to the rotation shaft 6:
the guide opening corresponds to the guide opening 7;
the seat electric power supply device corresponds to the seat electric power supply device 10;
the central wound portion corresponds to the central sound portion 21;
the outer circumferential wound portion corresponds to the outer circumferential wound portion 22;
the housing case corresponds to the lower case 31;
the housing cover corresponds to the upper cover 32;
the restriction piece corresponds to the restriction piece 317;
the insertion hole corresponds to the insertion hole 31s;
the electricity supply source corresponds to the vehicle 100;
the attachment target corresponds to the seat 200;
the central space corresponds to the central space Si;
the outer circumferential space corresponds to the outer circumferential space So;
the rotation table corresponds to the rotation table 81, 91;
the rotation roller corresponds to the rotation roller 82, 92;
the guide corresponds to the guide 83, 93;
the inner wound portion corresponds to the inner wound portion 211, 221;
the outer wound portion corresponds to the outer wound portion 212, 222; and
the turned-back portion corresponds to the turned back portion 213, 223.

However, the present invention is not limited to the above-described embodiment, and may be carried out in any of various embodiments.

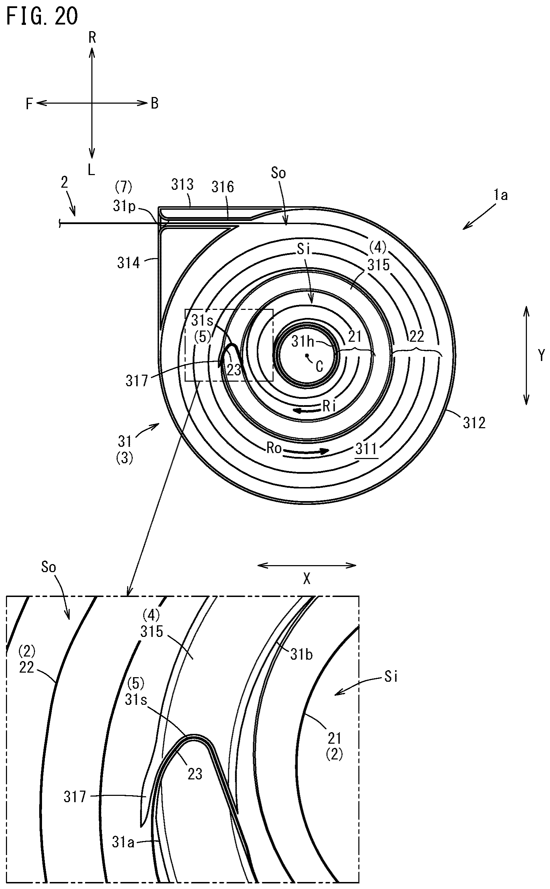

For example, in the cable winding device 1, the central wound portion 21 and the outer circumferential wound portion 22 are wound counterclockwise from the diametrically inner side toward the diametrically outer side as seen in a direction from the upper side U, which is along the central axis C. Alternatively, as shown in FIG. 20, either the central wound portion 21 or the outer circumferential wound portion 22 may be wound in an opposite direction to the above (see arrows Ri and Ro in FIG. 20).

In the cable winding device 1, the flexible flat cable 2 is a flexible flat cable. Alternatively, a so-called ribbon electric cable having a flat cross-section may be used. The ribbon electric cable includes electric cables, each including a covered conductive member, arranged parallel to each other in an integrated manner, and is bendable with a small bend radius, like the flexible flat cable. Even in the case where such a ribbon electric cable is used, one ribbon electric cable may be used or a plurality of ribbon electric cables may be used in a stacked manner.

The cable winding device 1 is an item of embodiment of the technological idea of the present invention. A case where the cable winding device 1 is applied to the seat electric power supply device 10 for the seat 200 capable of making a sliding operation and a rotation operation is described above. Alternatively, the cable winding device 1 may be applied to a steering electric power supply device for a steering handle capable of making a telescopic operation in addition to the rotation operation. That is, the technological idea of the present invention may be embodied as a so-called rotation connector device.

For example, in the cable winding device 1a, the flexible flat cable 2 includes the central wound portion 21 and the outer circumferential wound portion 22. The central wound portion 21 and the outer circumferential wound portion 22 respectively include the inner wound portions 211 and 221 of the flexible flat cable 2 wound around on the diametrically inner side, the outer wound portions 212 and 222 of the flexible flat cable 2 wound around on the diametrically outer side, and the arced turned-back portions 213 and 223 as the border portions between the inner wound portions 211 and 221 and the outer wound portions 212 and 222.

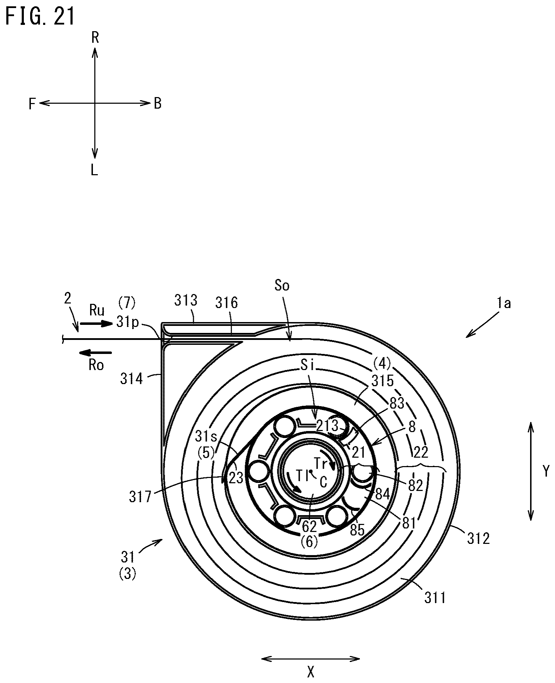

Alternatively, as shown in FIG. 21, the outer circumferential wound portion 22 may be wound like a swirl about the partition 4, while the central wound portion 21 includes the inner wound portion 211 of the flexible flat cable 2 wound around on the diametrically inner side, the outer wound portion 212 of the flexible flat cable 2 wound around on the diametrically outer side, and the arced turned-back portion 213 as the border portion between the inner wound portion 211 and the outer wound portion 212. In this case, the winding direction of the outer circumferential wound portion 22 is not limited to any specific direction.

Even the cable winding device 1a having such a configuration allows the flexible flat cable 2 to be drawn out or wound up in accordance with the sliding operation of the seat 200, and also prevents the flexible flat cable 2 from being twisted due to the rotation operation of the seat 200.

This will be described in more detail. In the case where the seat 200 is moved toward the rear side B (sliding operation) to pull the flexible flat cable 2 (see arrow Ro), the outer circumferential wound portion 22 like a swirl is wound while being tightened, and concurrently, the flexible flat cable 2 is fed. In this manner, the flexible flat cable 2 is drawn out toward the outside of the outer circumferential space So.

By contrast, in the case where the seat 200 is moved toward the front side F (sliding operation) to push the flexible flat cable 2 into the inside of the outer circumferential space So from the guide opening 7 (see arrow Ru), the outer circumferential wound portion 22 like a swirl is wound while being loosened, and concurrently, the flexible flat cable 2 is wound around. In this manner, the flexible flat cable 2 is wound up toward the inside of the outer circumferential space So.

In the case where the seat 200 is rotated counterclockwise (rotation operation), the rotation shaft 6 is rotated counterclockwise in association with the rotation operation of the seat 200. Therefore, the flexible flat cable 2 is wound around the inner wound portion 211 of the central wound portion 21. At this point, while the turned-back portion 213 of the central wound portion 21 is moved counterclockwise, the flexible flat cable 2 is fed from the outer wound portion 212. The flexible flat cable 2 is caused to follow the rotation operation of the seat 200 in this manner, so that the flexible flat cable 2 is prevented from being twisted.

By contrast, in the case where the seat 200 is rotated clockwise (rotation operation), the rotation shaft 6 is rotated clockwise in association with the rotation operation of the seat 200. Therefore, the flexible flat cable 2 is fed from the inner wound portion 211 of the central wound portion 21. At this point, while the turned-back portion 213 of the central wound portion 21 is moved clockwise, the flexible flat cable 2 is wound around the outer wound portion 212. The flexible flat cable 2 is caused to follow the rotation operation of the seat 200 in this manner, so that the flexible flat cable 2 is prevented from being twisted.

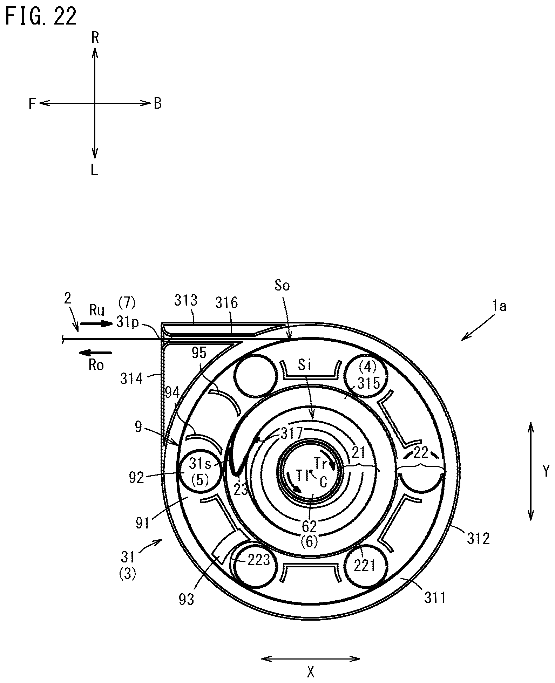

Alternatively, as shown in FIG. 22, the central wound portion 21 may be wound like a swirl about the rotation shaft 6, whereas the outer circumferential wound portion 22 may include the inner wound portion 221 of the flexible flat cable 2 wound around on the diametrically inner side, the outer wound portion 222 of the flexible flat cable 2 wound around on the diametrically outer side, and the arced turned-back portion 223 as the border portion between the inner wound portion 221 and the outer wound portion 222. In this case, the winding direction of the central wound portion 21 is not limited to any specific direction.

Even the cable winding device 1a having such a configuration allows the flexible flat cable 2 to be drawn out or wound up in accordance with the sliding operation of the seat 200, and also prevents the flexible flat cable 2 from being twisted due to the rotation operation of the seat 200.

This will be described in more detail. In the case where the seat 200 is moved toward the rear side B (sliding operation) to pull the flexible flat cable 2 (see arrow Ro), the turned-back portion 223 of the outer circumferential wound portion 22 is moved counterclockwise, while the flexible flat cable 2 is fed from the inner wound portion 221. In this manner, the flexible flat cable 2 is drawn out toward the outside of the outer circumferential space So.

By contrast, in the case where the seat 200 is moved toward the front side F (sliding operation) to push the flexible flat cable 2 into the inside of the outer circumferential space So from the guide opening 7 (see arrow Ru), the turned-back-portion 223 of the outer circumferential wound portion 22 is moved clockwise, while the flexible flat cable 2 is wound around the inner wound portion 221. In this manner, the flexible flat cable 2 is wound up toward the inside of the outer circumferential space So.

In the case where the seat 200 is rotated counterclockwise (rotation operation), the rotation shaft 6 is rotated counterclockwise in association with the rotation operation of the seat 200. Therefore, the central wound portion 21 like a swirl is wound while being tightened. The central wound portion 21 is caused to follow the rotation operation of the seat 200 in this manner, so that the flexible flat cable 2 is prevented from being twisted.

By contrast, in the case where the seat 200 is rotated clockwise (rotation operation), the rotation shaft 6 is rotated clockwise in association with the rotation operation of the seat 200. Therefore, the central wound portion 21 as a swirl is wound while being loosened. The central wound portion 21 is caused to follow the rotation operation of the seat 200 in this manner, so that the flexible flat cable 2 is prevented from being twisted.

In the cable winding device 1a according to this embodiment, the direction in which the flexible flat cable 2 is to be guided out is restricted by the insertion hole 31s. Alternatively, as shown in FIG. 21 or FIG. 22, the direction in which the flexible flat cable 2 is to be guided out may be restricted by the restriction piece 317. That is, the restriction piece 317 may be provided, which restricts the direction in which the flexible flat cable 2, guided out from the holding portion 5, is to be guided out.

Even with the cable winding device 1a having such a configuration, the direction in which the flexible flat cable 2 is to be guided out is restricted with certainty. Therefore, the flexible flat cable 2 is prevented from being locally subjected to a load as a result of being bent by the sliding operation and the rotation operation of the seat 200.

In the cable winding device 1a, the flexible flat cable 2 is a flexible flat cable. Alternatively, a so-called ribbon electric cable having a flat cross-section may be used. The ribbon electric cable includes electric cables, each including a covered conductive member, arranged parallel to each other in an integrated manner, and is bendable with a small bend radius, like the flexible flat cable. Even in the case where such a ribbon electric cable is used, one ribbon electric cable may be used or a plurality of ribbon electric cables may be used in a stacked manner.

The cable winding device 1a is an item of embodiment of the technological idea of the present invention. A case where the cable winding device 1a is applied to the seat electric power supply device 10 for the seat 200 capable of making a sliding operation and a rotation operation is described above. The cable winding device 1a may be applied to a steering electric power supply device for a steering handle capable of making a telescopic operation in addition to the rotation operation. That is, the technological idea of the present invention may be embodied as a so-called rotation connector device.

### REFERENCE SIGNS LIST

1, 1a ... cable winding device
2 ... flexible flat cable
3 ... housing
4 ... partition
5 ... holding portion
6 ... rotation shaft
7 ... guide opening
10 ... seat electric power supply device
21 ... central wound portion
22 ... outer circumferential wound portion
31 ... lower case
32 ... upper cover
81, 91 ... rotation table
82, 92 ... rotation roller
83, 93 ... guide
317 ... restriction piece
31s ... insertion hole
100 ... vehicle
200 ... seat
211, 221 ... inner wound portion
212, 222 ... outer wound portion
213, 223 ... turned-back portion
Si ... central space
So ... outer circumferential space

## Claims

1. A cable winding device, comprising:
a band-like flat cable;
a housing accommodating the flat cable;
a partition dividing an inner space of the housing into a central space and an outer circumferential space; and
a holding portion holding a border portion of the flat cable between a portion thereof accommodated in the central space and a portion thereof accommodated in the outer circumferential space,
wherein:
a rotation shaft rotatable about a direction along a width direction of the flat cable while holding the flat cable is provided in a central portion of the central space,
a guide opening guiding the flat cable, to be drawn out from the inside toward the outside of the outer circumferential space or to be wound up from the outside toward the inside of the outer circumferential space, is provided at an outer edge of the outer circumferential space,
the flat cable includes a central wound portion wound like a swirl about the rotation shaft in the central space, and an outer circumferential wound portion wound like a swirl about the partition in the outer circumferential space, and
one end of the flat cable extended from an inner circumferential portion of the central wound portion is connected with an electric member of an attachment target capable of making a sliding operation and a rotation operation, and the other end of the flat cable extended from an outer circumferential portion of the outer circumferential wound portion is connected with an electric member on an electric power supply source side.

2. The cable winding device according to claim 1, wherein the central wound portion and the outer circumferential wound portion are wound in the same direction as each other.

3. The cable winding device according to claim 1, wherein the holding portion is an insertion hole through which the flat cable is to be inserted, the insertion hole being formed in the partition.

4. The cable winding device according to claim 1, further comprising a restriction piece restricting a direction in which the flat cable guided out from the holding portion is to be guided out.

5. The cable winding device according to claim 1, wherein the flat cable is of one flexible flat cable or includes a plurality of flexible flat cables provided in a stacked manner.

6. A cable winding device, comprising:
a band-like flat cable;
a housing accommodating the flat cable in a state where the flat cable is wound like a swirl;
a partition dividing an inner space of the housing into a central space and an outer circumferential space; and
a holding portion holding a border portion of the flat cable between a portion thereof accommodated in the central space and a portion thereof accommodated in the outer circumferential space,
wherein:
a rotation shaft rotatable about a direction along a width direction of the flat cable while holding the flat cable is provided in a central portion of the central space,
a guide opening guiding the flat cable, to be drawn out from the inside toward the outside of the outer circumferential space or to be wound up from the outside toward the inside of the outer circumferential space, is provided at an outer edge of the outer circumferential space,
the flat cable includes a central wound portion wound around in the central space, and an outer circumferential wound portion wound around in the outer circumferential space,
one end of the flat cable extended from an inner circumferential portion of the central wound portion is connected with an electric member of an attachment target capable of making a sliding operation and a rotation operation, and the other end of the flat cable extended from an outer circumferential portion of the outer circumferential wound portion is connected with an electric member on an electric power supply source side, and
at least one of the central wound portion and the outer circumferential wound portion includes an inner wound portion of the flat cable wound around on a diametrically inner side, an outer wound portion of the flat cable wound around on a diametrically outer side, and an arced turned-back portion as a border portion between the inner wound portion and the outer wound portion.

7. The cable winding device according to claim 6, further comprising:
a rotation table rotatable about the rotation shaft, and
a rotation roller rotatable about a direction along the rotation shaft while being supported by the rotation table,
wherein the rotation roller is located on an inner circumferential surface side of the turned-back portion.

8. The cable winding device according to claim 7, further comprising a guide provided at a position away from an outer circumferential surface of the rotation roller in a circumferential direction of the rotation table,
wherein the guide is located on an outer circumferential surface side of the turned-back portion.

9. The cable winding device according to claim 6, wherein the holding portion is an insertion hole through which the flat cable is to be inserted, the insertion hole being formed in the partition.

10. The cable winding device according to claim 6, further comprising a restriction piece restricting a direction in which the flat cable guided out from the holding portion is to be guided out.

11. The cable winding device according to claim 6, wherein the flat cable is of one flexible flat cable or includes a plurality of flexible flat cables provided in a stacked manner.

12. A seat electric power supply device using the cable winding device according to any one of claims 1 through 11, wherein:
the rotation shaft is coupled with a seat capable of making a sliding operation and a rotation operation, and
one end of the flat cable extended from an inner circumferential portion of the central wound portion is connected with an electric member of the seat, and the other end of the flat cable extended from an outer circumferential portion of the outer circumferential wound portion is connected with an electric member on an electric power supply source side.
